# EUROPÄISCHE PATENTSCHRIFT

(11) **EP 2 339 312 B1**
(45) Veröffentlichungstag und Bekanntmachung des Hinweises auf die Patenterteilung: **25.03.2015**
(21) Anmeldenummer: 11002736.4
(22) Anmeldetag: 24.10.2007
(51) Int. Cl.: G01L 19/14, G01L 19/00

(54) **Abdichteinrichtung zum Verschliessen eines Druckmesszellengehäuses, Druckmesszelleneinrichtung bzw. Druckmessvorrichtung damit**
Sealing device for sealing a pressure gauge cell unit, pressure gauge cell unit respectively measuring device fitted therewith
Dispositif d'étanchéité pour la fermeture d'un boîtier cellulaire de mesure de pression et ensemble cellulaire de mesure de pression muni de ce dispositif

(30) Priorität: 03.01.2007 DE 102007001445
(43) Veröffentlichungstag der Anmeldung: 29.06.2011
(62) Teilanmeldung aus: 07020866.5
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- EP-A1- 1 126 259
- EP-A2- 1 531 323
- DE-A1- 10 064 811
- US-A- 4 425 799
- US-A- 5 275 054
- ANONYMOUS: 'FORM-IN-PLACE GASKETING' VTI VACUUM TECHNOLOGIES INC. WEBSITE, [Online] 01 Januar 2007, Seiten 1 - 2, XP055024241 Gefunden im Internet: <URL:http://web.archive.org/web/20070101004 907/http://vactecinc.com/gasketing.htm> [gefunden am 2012-04-11]

## Beschreibung

Abdichteinrichtung zum Verschließen eines Druckmesszellengehäuses, Druckmesszelleneinrichtung bzw. Druckmessvorrichtung damit.

Die Erfindung bezieht sich auf eine Abdichteinrichtung zum Verschließen eines Druckmesszellengehäuses, auf eine Druckmesszelleneinrichtung mit einer solchen Abdichteinrichtung bzw. auf eine Druckmessvorrichtung mit einer solchen Druckmesszelleneinrichtung.

Allgemein bekannt ist aus DE 100 64 811 A1 eine Druckmessvorrichtung mit einem Gehäuse, in dessen vorderseitigem Abschnitt eine Druckmesszelle eingesetzt ist. Die Druckmesszelle ist dabei mittels spezieller Spannelemente vorderseitig in dem Gehäuse eingesetzt. Außerdem ist die Druckmesszelle in rückseitiger Richtung mit einer Leiterplatte elektrisch verbunden, wobei die Leiterplatte üblicherweise eine Auswerte-Elektronik aufweist und innerhalb des Gehäuses aufgenommen ist. Im Fall einer Druckmesszelle, welche mit einem Referenzdruck arbeitet, führt außerdem von der Rückseite der Druckmesszelle aus eine Druckausgleichsleitung durch das Gehäuse in rückseitiger Richtung hindurch.

Insbesondere im Fall einer Messeinrichtung für eine hydrostatische Füllstandsmessung mit derart eingebauten elektronischen Schaltungen wird das Gehäuse rückseitig der Druckmesszelle mit einem Vergussmaterial, z. B. einem aushärtbaren Silikon-Verguss, befüllt. Dies dient einerseits zum Schutz der elektrotechnischen Komponenten und andererseits zur Reduktion des inneren Luftvolumens innerhalb des Gehäuses.

Dokument EP 1 126 259 A1 offenbart eine Abdichteinrichtung gemäß Oberbegriff von Anspruch 1.

Allgemein bekannt ist auch, eine Druckmesszellen-Elektronik in einem metallischen Gehäuse, in welchem eine Leiterplatte aufgenommen ist, dicht zu verlöten, wobei der Druckausgleich mittels eines durch das Gehäuse hindurchführenden Schlauches ermöglicht wird. Oftmals sind derartige Messgeräte mit kapazitiv auswertenden Druckmesszellen aufgebaut.

Nachteilhaft sind derartige Anordnungen insbesondere beim Einsatz eines Vergussmaterials, wenn dieses in den unmittelbaren Bereich einer Elektronikkomponente der Druckmesszelle gelangt, da sich das Vergussmaterial in einem kapazitiven Messsystem negativ auf das Temperaturverhalten auswirkt.

Die Aufgabe der Erfindung besteht darin, eine Abdichteinrichtung zum Verschließen des Druckmesszellengehäuses bereitzustellen, welche einen einfachen Aufbau aufweist und zugleich eine sichere Abdichtung eines freien Raums mit einer oder mehreren Elektronikkomponenten einer Druckmesszelle ermöglicht.

Diese Aufgabe wird gelöst durch eine Abdichteinrichtung zum Verschließen eines Druckmesszellengehäuses mit den Merkmalen gemäß Patentanspruch 1, durch eine Druckmesszelleneinrichtung mit den Merkmalen gemäß Anspruch 10 bzw. durch eine Druckmessvorrichtung mit den Merkmalen gemäß Patentanspruch 14. Vorteilhafte Ausgestaltungen sind Gegenstand abhängiger Ansprüche.

Die Erfindung bezieht sich insbesondere auf eine Abdichteinrichtung zum Verschließen eines Druckmesszellengehäuses, wobei die Abdichteinrichtung eine Druckausgleichsöffnung für eine Druckausgleichsleitung einer im Druckmesszellengehäuse aufgenommenen Druckmesszelle aufweist und wobei die Abdichteinrichtung aus einem formstabilen Hartteil mit zumindest einem im Bereich der Druckausgleichsöffnung an dem Hartteil angeordneten, insbesondere befestigten elastischen Weichteil ausgebildet ist. Die Ausgestaltung der Abdichtung bietet durch den formstabilen Hartteil einen festen Verschluss des Druckmesszellengehäuses und durch das zumindest eine elastische Weichteil zugleich eine Dichtung für Leitungselemente aus.

Bevorzugt wird, wenn das Hartteil aus einem Thermoplast ausgebildet ist und das Weichteil aus einem thermoplastischen Elastomer ausgebildet ist. Bevorzugt sind das Hartteil und das zumindest eine Weichteil mittels eines Zwei-Komponenten-Spritzgussverfahrens hergestellt.

Bevorzugt wird, wenn im Bereich der Druckausgleichsöffnung auf zumindest einer Seite eine Vertiefung im Hartteil ausgebildet ist zum Einstecken oder Einfügen einer Druckausgleichsleitung und/oder eines Weichteils oder vorzugsweise für ein zentriertes Einbringen des Weichteils.

Bevorzugt wird, wenn im Bereich der Druckausgleichsöffnung eine Erhebung, insbesondere ein vorspringender rohrförmiger Abschnitt des Hartteils ausgebildet ist. Eine solche Erhebung stützt das aufgesetzte Weichteil gegen die Druckmesszelle besser abdichtend ab bzw. ermöglicht bei entsprechender Ausgestaltung das Einstecken eines Rohrs oder dergleichen oder das Überstülpen eines vorzugsweise leicht elastischen schlauchförmigen Elements.

Bevorzugt wird wenn das Weichteil sich durch die das Hartteil durchdringende Druckausgleichsöffnung hindurch erstreckend ausgebildet ist. Dadurch wird z.B. bei nicht geradliniger Führung eine elastische Lagerung durch die Abdichteinrichtung hindurch bei trotzdem sehr dichter Abdichtung ermöglicht.

Bevorzugt wird wenn das Weichteil die Druckausgleichsöffnung umgebend zwischen dem Hartteil und einer Öffnung in der Druckmesszelle oder einer Druckausgleichsleitung angeordnet ist. Dabei ist vorteilhaft, wenn das Weichteil sich vom Hartteil in Richtung der Druckmesszelle bis zur Druckmesszelle erstreckend ausgebildet ist.

Eigenständig bevorzugt wird außerdem eine Druckmesszelleneinrichtung mit einer solchen Abdichteinrichtung und mit einer Druckmesszelle, wobei zwischen der Abdichteinrichtung und der Druckmesszelle ein freier Raum mit zumindest einer Elektronikkomponente ausgebildet ist.

Das Weichteil liegt bevorzugt eine Öffnung der Druckmesszelle dicht abdichtend umgebend direkt an der Druckmesszelle an.

Das Weichteil ist bevorzugt eine Druckausgleichsleitung der Druckmesszelle abdichtend, insbesondere dicht umgebend ausgebildet.

Das Weichteil ist bevorzugt eine Druckausgleichsleitung abdichtend dicht umgebend ausgebildet, wobei die Druckausgleichsleitung auf einer zur Druckmesszelle abgewandten Seite der Abdichteinrichtung durch ein Gehäuse einer Druckmessvorrichtung führt.

Eigenständig bevorzugt wird außerdem eine Druckmessvorrichtung mit einer solchen Druckmesszelleneinrichtung vorderseitig eines Gehäuses, wobei durch das Gehäuse eine Druckausgleichsleitung zur Druckausgleichsöffnung fluchtend führt, wobei die Druckausgleichsleitung durch das zumindest eine Weichteil zum Gehäuse-Innenraum des Gehäuses abgedichtet ist und wobei der Gehäuse-Innenraum mit einem Vergussmaterial vergossen ist.

Verfahrensgemäß wird dabei bevorzugt, wenn die Abdichteinrichtung mittels eines Zwei-Komponenten-Spritzgussverfahrens aus dem Hartteil und dem zumindest einen Weichteil ausgebildet wird.

Kernelement ist somit eine Abdichteinrichtung in einer Messeinrichtung mit Druckmesszellen-Elektronik und Auswerte-Elektronik gemäß einer besonders bevorzugten Ausführungsform. Vorteilhaft wird ermöglicht, dass die Druckmesszellen-Elektronik bzw. eine entsprechende Elektronikkomponente durch die Abdichteinrichtung gegen eindringenden Schutzverguss oder Luft während der Fertigung geschützt ist, aber trotzdem ein Druckausgleich durch die Abdichteinrichtung hindurch ermöglicht wird, wobei die Abdichteinrichtung zugleich als Befestigungsteil ausgebildet ist. Dies wird dadurch ermöglicht, dass die Abdichteinrichtung aus zwei Komponenten besteht, einem Hartteil, welches eine Stützwirkung hat, und einem Weichteil, welches als Dichtung ausgebildet ist.

Insbesondere in einem kapazitiven Messsystem wird dadurch ermöglicht, ausschließlich den kapazitiv messenden Teil der Elektronik-Baugruppe bzw. einer entsprechenden Elektronikkomponente in einem freien Raum mit Luft zu belassen, diesen freien Raum dicht zu verschließen und den restlichen Teil eines rückseitig ausgebildeten Messgerätes bzw. von dessen Gehäuse mit einem Vergussmaterial zu befüllen. Zugleich wird gemäß der bevorzugtesten Ausgestaltung ermöglicht, den Druckausgleich zwischen der vorderseitigen Druckmesszelle und einem rückseitigen Anschlussabschnitt unbeeinträchtigt durch das Vergussmaterial nach außen zu führen.

Die Abdichteinrichtung ermöglicht somit, ein Druckmesszellengehäuse mit einer vorderseitig angeordneten Druckmesszelle, welche als Relativ-Druckmesszelle ausgestaltet ist, im rück seitigen Bereich mit der Abdichteinrichtung dicht zu verschließen, wobei zwischen der Abdichteinrichtung und der Druckmesszelle ein freier Raum zur Aufnahme zumindest einer Elektronikkomponente verbleibt. Mittels einer oder mehrerer Druckausgleichleitungen, welche durch eine in der Abdichteinrichtung ausgebildete Druckausgleichsöffnung hindurchführen, wird der Druckausgleich der Relativ-Druckmesszelle ermöglicht. Die Dichtung solcher Druckausgleichleitungen wird dabei durch das Weichteil der Abdichteinrichtung ermöglicht. Dabei kann das zumindest eine Weichteil abdichtend an einer eigenständigen Druckausgleichsleitung anliegen oder selber bis zu einer entsprechenden Öffnung in der Druckmesszelle geführt sein und somit selber eine solche Druckausgleichsleitung ausbilden. Optional kann auch außenseitig umlaufend ein solches Weichteil an dem Hartteil ausgebildet sein oder sich an dem Hartteil bis zu dessen Außenumfang erstrecken, um zugleich eine insbesondere ringförmige Dichtung für den Übergangsabschnitt zum Druckmesszellengehäuse auszubilden. Alternativ können im Umfangsbereich jedoch auch in für sich bekannter Art und Weise insbesondere ringförmige Dichtringe eingesetzt sein.

Vorzugsweise werden insbesondere zwei elastische Schlauchansätze an den beiden gegenüberliegenden Seiten des Hartteils als Weichteile im Bereich der Druckausgleichsöffnung ausgebildet, um sowohl in Richtung der Druckmesszelle als auch in Richtung eines rückseitig am Druckmesszellengehäuse anschließenden Innenraum eines Gehäuses einer Druckmessvorrichtung das Ansetzen von eigenständigen Druckausgleichsleitungen bzw. vorderseitig gegebenenfalls auch direkt der Druckmesszelle zu ermöglichen. Optional können derartige eigenständige Druckmessleitungen, beispielsweise in Art einer Kapillarleitung ausgebildete Druckmessleitungen, auch durch die Weichteile und gegebenenfalls auch durch die Druckausgleichsöffnung in dem Hartteil hindurchgeführt werden.

Prinzipiell besteht die Möglichkeit, das Hartteil und das eine Weichteil oder die vorzugsweise mehreren Weichteile in separaten Fertigungsschritten herzustellen und abschließend aneinander anzuordnen, insbesondere aneinander mittels beispielsweise Kleben zu befestigen. Besonders bevorzugt wird jedoch eine Fertigung einer solchen Abdichteinrichtung mittels eines Zwei-Komponenten-Spritzgussverfahrens aus einer ersten Komponente, welche das Hartteil ausbildet, und aus einer oder mehreren zweiten Komponenten, welche die Weichteile ausbilden. Das Hartteil kann dabei z. B. als Kunststoff-Spritzgussteil aus einem Thermoplast gefertigt werden. Das Weichteil kann vorzugsweise aus einem TPE-Spritzguss (TPE: Thermoplastisches Elastomer) ausgebildet werden. Bei einer solchen Ausgestaltung sorgt das Hartteil der Abdichteinrichtung für die Befestigungsfunktion und Formstabilität innerhalb des rückseitigen Abschnitts des Druckmesszellengehäuses, während das Weichteil als elastische Bereiche die Abdichtungsfunktion übernimmt.

Ermöglicht wird dadurch ein einfacher, modularer Aufbau einer Druckmesszelleneinrichtung bzw. einer Druckmessvorrichtung mit einer solchen Druckmesszelleneinrichtung mit wenigen Einzelteilen und somit wenig manuellen Fertigungsschritten, was letztendlich auch zu einer vereinfachten und kostengünstigen Produktion führt. Eine Montage von Dichtungen in Handarbeit kann durch diese automatisierte Montage ersetzt werden. Durch eine automatisierte Montage wird auch die Fertigungssicherheit erhöht, da die Montage der Dichtung und Schläuche bzw. Druckausgleichsleitungen automatisch in einem einzigen Fertigungsprozess erfolgen kann. Spontane Qualitätsmängel werden dadurch vermieden.

Ein Ausführungsbeispiel wird nachfolgend anhand der Zeichnung näher erläutert. Dabei verweisen bei der Darstellung verschiedener Ausführungsformen gleiche Bezugszeichen auf jeweils gleiche oder gleich wirkende Komponenten bzw. Funktionsmerkmale, wobei diesbezüglich jeweils auch Ausführungen zu anderen Ausführungsformen berücksichtigbar sind. Es zeigen:
- Fig. 1: eine Schnittansicht durch eine Druckmessvorrichtung mit einer vorderseitigen Druckmesszelleneinrichtung, welche eine Abdichteinrichtung zum rückseitigen Abdichten eines Druckmesszellengehäüses aufweist,
- Fig. 2: eine Ausschnittsvergrößerung zur deutlicheren Darstellung des Bereichs mit dem Druckmesszellengehäuse in Fig. 1,
- Fig. 3: eine alternative Ausführungsform mit einer modifizierten Abdichteinrichtung,
- Fig. 4: eine weitere alternative Ausführungsform mit einer modifizierten Abdichteinrichtung und
- Fig. 5: eine noch weitere Ausführungsform mit einer modifizierten Abdichteinrichtung.

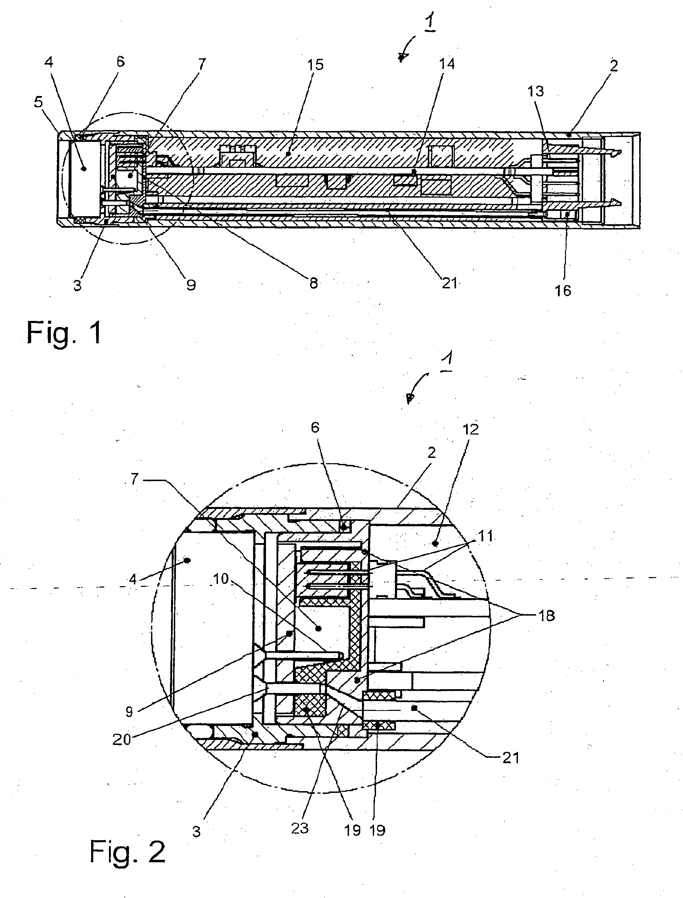

Fig. 1 und 2 zeigen eine beispielhafte Druckmessvorrichtung 1 mit einem Gehäuse 2, an welchem vorderseitig ein Druckmesszellengehäuse 3 mit einer darin eingesetzten Druckmesszelle 4 befestigt ist. Vorzugsweise ist das Druckmesszellengehäuse 3 dabei wieder lösbar in dem Gehäuse 2 befestigt, beispielsweise eingeschraubt oder mit einer Schweißverbindung gefügt. In für sich bekannter Art und Weise ist vorderseitig in dem Druckmesszellengehäuse 3 die eigentliche Druckmesszelle 4 eingesetzt. Wie dargestellt, kann die Druckmesszelle 4 mittels einer stirnseitig offenen und den Druckmesszellenrand stirnseitig übergreifenden Kappe 5 gegen einen innenseitig ragenden Vorsprung des Druckmesszellengehäuses 3 gespannt sein. Üblicherweise wird bei einer solchen Anordnung ein Dichtungsring 6 zwischen Kappe 5 und Druckmesszellengehäuse 3 und/oder zwischen der Druckmesszelle und dem Druckmesszellengehäuse zur Abdichtung eines rückseitig der Druckmesszelle 4 gelegenen freien Raums 7 eingesetzt. Alternativ kann die Druckmesszelle 4 aber auch direkt in oder an dem Druckmesszellengehäuse 3 befestigt sein, beispielsweise daran angeklebt oder angelötet sein.

In rückseitiger Richtung wird das Druckmesszellengehäuse 3 durch eine Abdichteinrichtung 8 begrenzt, so dass der Freiraum 7 in radialer Richtung von innenseitigen Wandungen des Druckmesszellengehäuses 3, in vorderseitiger Richtung durch die Druckmesszelle 4 und in rückseitiger Richtung durch die Abdichteinrichtung 8 begrenzt ist: Vorzugsweise ist die Abdichteinrichtung 8 so an dem Druckmesszellengehäuse 3 angeordnet, insbesondere fest befestigt, dass der Freiraum 7 gegenüber dem Umfeld dicht abgeschlossen ist. Vorzugsweise ist der Freiraum 7 gegenüber dem Eindringen von Flüssigkeiten und/oder Luft ausreichend abdichtend abgeschlossen.

Innerhalb des freien Raums 7 ist vorzugsweise zumindest eine Elektronikkomponente 9 angeordnet, welche über ein Anschlusselement 10 mit der Druckmesszelle 4 in für sich bekannter Art und Weise verbunden ist. Die Elektronikkomponente 9 kann insbesondere in Form einer Leiterplatte mit elektronischen Bauteilen und/oder Leiterbahnen ausgebildet sein. Zur Kontaktierung in rückseitiger Richtung führen elektrische Leiter 11, welche insbesondere in Art einer Steckverbindung ausgestaltet sein können, von der Elektronikkomponente 9 in rückseitiger Richtung durch die Abdichteinrichtung 8 in den Innenraum bzw. Vergussraum 12 des rückseitigen Gehäuses 2 hinein. Die elektrischen Leiter 11 können dabei in rückseitiger Richtung vollständig durch das Gehäuse 2 zu einer rückseitigen Anschlusseinrichtung 13 geführt sein, um die Druckmessvorrichtung 1 an externe Komponenten anschließen zu können. Vorzugsweise ist jedoch in dem Gehäuse 2 eine Auswerte-Elektronik 14 aufgenommen, welche beispielsweise in Art einer Platine mit elektronischen Komponenten ausgestaltet ist. In diesem Fall sind die elektrischen Leiter 11 mit entsprechenden Gegenkontakten der Auswerte-Elektronik 14 verbunden.

Im Fall der Ausgestaltung als einer Druckmessvorrichtung mit einer Relativ-Druckmesszelle als der Druckmesszelle 4 führt außerdem eine Druckausgleichsleitung von der Druckmesszelle 4 durch den freien Raum 7, die Abdichteinrichtung 8 und den Raum innerhalb des Gehäuses 2 zu einem rückseitigen Druckausgleichsanschluss, beispielsweise Druckausgleichsfilter 16, in für sich bekannter Art und Weise hindurch. Vorzugsweise wird bei der Fertigung einer solchen Druckmessvorrichtung 1 der Innenraum bzw. Vergussraum 12 des Gehäuses 2 abschließend nach dem Einsetzen der Auswerte-Elektronik 14 und der Druckausgleichsleitung 17 mit einem Vergussmaterial 15 in für sich bekannter Art und Weise befüllt. Dabei ist die Abdichteinrichtung 8 so ausgestaltet, dass das Vergussmaterial 15 nicht in den freien Raum 7 gelangt. Diesbezüglich kritische Bereiche sind die Übergänge bzw. Durchgangsöffnungen, durch welche die elektrischen Leiter 11 und Komponenten für den Druckausgleich geführt sind.

Wesentliches Element ist somit die Abdichteinrichtung 8, welche rückseitig in oder an dem Druckmesszellengehäuse 3 befestigt ist. Bei der dargestellten Ausführungsform erfolgt die Befestigung dadurch, dass zuerst die Abdichteinrichtung 8 von der Vorderseite her bis zu einem Anschlag in das Gehäuse 2 eingesetzt wird und nachfolgend das Druckmesszellengehäuse 3 mit der Druckmesszelle 4 an dem Gehäuse 2 befestigt wird. Dann wird die Kappe 5 mit der zuvor aufgebrachten Dichtung 6 mittels einer Gewindeverbindung oder alternativ mit einer Schweißverbindung befestigt. Alternativ kann die Abdichteinrichtung 8 aber auch eigenständig an dem Druckmesszellengehäuse 3 befestigt sein, beispielsweise an dessen Wandung angeklebt und/oder angeschraubt sein. Eine vorzugsweise im freien Raum 7 aufgenommene Elektronikkomponente 9 wird insbesondere in einem ersten Montageschritt an der Druckmesszelle 4 befestigt, beispielsweise angesteckt und/oder mit Rastelementen wieder lösbar angesetzt oder angelötet.

Die Abdichteinrichtung 8 besteht als zentrales Element aus zumindest zwei eigenständigen Komponenten, einem Hartteil 18 und zumindest einem Weichteil 19. Das Hartteil 18 erstreckt sich vorzugsweise über die gesamte rückseitige Öffnungsfläche des Druckmesszellengehäuses 3 und ist formstabil ausgestaltet als Stütz- und Verschlusselement der rückseitigen Öffnung des Druckmesszellengehäuses 3. Das Weichteil 19 bzw. die Weichteile 19 sind hingegen aus einem elastischen Material ausgebildet, welches ausreichend elastisch ist, eine flüssigkeits-und/oder gasdichte bzw. luftdichte Abdichtung zu einer angrenzenden Komponente zu ermöglichen. Angrenzende Komponente kann dabei insbesondere eine Wandung der Druckmesszelle 4, eines elektrischen Leiters 11 und/oder einer Druckausgleichsleitung 20, 21 sein. Auch der Übergangsbereich zwischen dem außenseitigen Hartteil 18 und dem stirnseitigen oder seitlichen Wandungsabschnitt des Druckmesszellengehäuses 3 kann anstelle des Einsatzes eines Dichtrings 22 aus dem Weichteil 19 bzw. einem weiteren solchen Weichteil ausgebildet sein.

Die Fertigung der Abdichteinrichtung 8 kann auf einfache Art und Weise durch die Herstellung der verschiedenen einzelnen Komponenten, das heißt des zumindest einen Hartteils 18 und des zumindest einen Weichteils 19 und das anschließende feste miteinander verbinden dieses einzelnen Komponenten, beispielsweise mittels Rast- oder Eingriffsverbindungen oder durch wechselseitiges Verkleben. Besonders bevorzugt wird jedoch eine Abdichteinrichtung 8, welche mittels eines Zwei-Komponenten-Spritzgussverfahrens hergestellt ist. Insbesondere in letzterem Fall kann das Hartteil 18 z. B. als Kunststoff-Spritzgussteil aus einem Thermoplast gefertigt werden, während das zumindest eine Weichteil 19 aus insbesondere einem TPE-Spritzgussmaterial gefertigt wird. Dadurch bietet das sich quer durch oder über die Öffnung des Druckmesszellengehäuses 3 erstreckende Hartteil 18 als formstabile Komponente einen festen Verschluss, während das oder die Weichteile 19 als Dichtungselemente dienen.

Bei dem Einsatz einer Relativ-Druckmesszelle als Druckmesszelle 4 führt durch die Abdichteinrichtung 8 eine Druckausgleichsöffnung 23 in rückseitiger Richtung von dem freien Raum 7 in den rückseitigen Vergussraum 12 des Gehäuses 2 hinein. Die Ausgestaltung des Hartteils 18 und/oder des zumindest einen Weichteils 19 ist dabei derart, dass eine dichte Verbindung mit den Druckausgleichsleitungen 20 und/oder einer Wandung der Druckmesszelle 4 selber ermöglicht wird.

Bei der anhand Fig. 1 und 2 dargestellten Ausführungsform führt die Druckausgleichsöffnung 23 schräg, das heißt nicht achsparallel durch das Hartteil 18 hindurch, wobei die Druckausgleichsöffnung 23 einen gestuften oder konischen Durchmesser aufweist, um eine Anpassung an verschieden weit geöffnete Druckausgleichsleitungen 20 bzw. 21 auf den beiden Seiten der Abdichteinrichtung 8 zu ermöglichen. Bei dieser speziellen Ausgestaltung der Druckausgleichsöffnung 23 handelt es sich jedoch lediglich um eine beispielhafte Ausführungsform, welche die Ausgestaltung in beliebiger anderer Form, insbesondere geradlinig achsparallel zylindrischer Form, nicht ausschließt.

Zur Erzeugung einer höheren Stabilität ist das Hartteil 18 in dem Bereich der Druckausgleichsöffnung 23 bevorzugt in axialer Richtung stärker ausgebildet, als dies in dazu benachbarten Bereichen des Hartteils 18 erforderlich ist.

Bei der beispielhaften Ausführungsform sind zwei Weichteile 19 an der Abdichteinrichtung 8 ausgebildet. Das eine der Weichteile 19 ist in rückseitiger Richtung die Druckausgleichsöffnung 23 umgebend angeordnet, um das Ansetzen oder Einführen oder Überstülpen eines Schlauches oder Rohrs als der einen Druckausgleichsleitung 21 zu ermöglichen. Um eine stabile Aufnahme und stabilen Halt in radialer Richtung bzw. seitlicher Richtung zu bieten, ist das Hartteil 18 in dem Abschnitt um die Druckausgleichsöffnung 23 herum vorzugsweise zurückspringend ausgebildet, wobei das Weichteil 19 zumindest teilweise in einen seitlich in die Druckausgleichsöffnung 23 herum zurückspringenden Bereich des Hartteils 18 eingreift.

Auf der gegenüberliegenden vorderseitigen Seite der Abdichteinrichtung 8 erstreckt sich das dortige Weichteil 19 vorzugsweise über die nahezu gesamte Breite bzw. Oberfläche der Abdichteinrichtung 8, um auch als elastische Aufnahme für den elektrischen Leiter 11 zu dienen. Insbesondere ist das Weichteil 19 auf der vorderseitigen Seite um die Druckausgleichsöffnung 23 herum ausgebildet, um die von der Druckmesszelle 4 in rückseitiger Richtung führende Druckausgleichsleitung 20 in sich abdichtend aufnehmen zu können.

Bei der Druckmesszelle gemäß Fig. 1 und 2 mit einer Kapillare als Druckausgleichsleitung 20 ist die Abdichtungseinrichtung 8 somit so gestaltet, dass der durch das Weichteil gebildete Schlauchansatz radial um die Kapillare dichtend angeordnet ist. Vorzugsweise weisen Abschnitte des Weichteils 19, in welche eine Kapillare bzw. Druckausgleichsleitung 20, 21 eingeführt wird, eine Einführschräge zur Erleichterung der Montage auf.

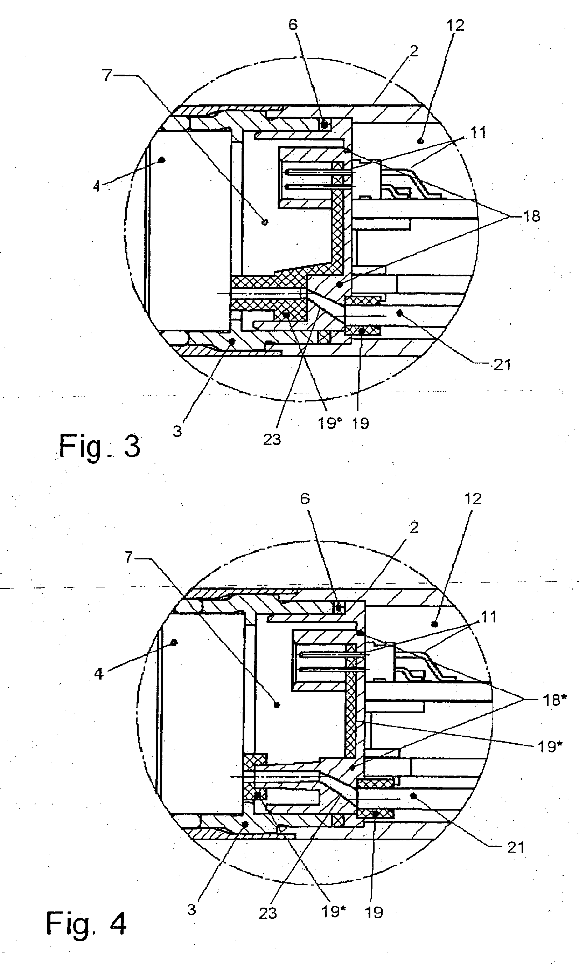

Fig. 3 zeigt eine modifizierte Ausgestaltung der Abdichteinrichtung 8, wobei bei dieser Darstellung zur Vereinfachung die Elektronikkomponente 9 nicht skizziert ist. Bei dieser Ausführungsform ist eine einfach aufgebaute Druckmesszelle 4 eingesetzt, welche in rückseitiger Richtung keine Kapillare oder sonstig ausgestaltete eigenständige Druckausgleichsleitung aufweist. Mit anderen Worten weist die Druckmesszelle 4 in rückseitiger Richtung lediglich eine Öffnung als Druckausgleichsöffnung auf. Um eine Verbindung mit der Druckausgleichsöffnung 23 in dem Hartteil 18 der Abdichteinrichtung 8 zu ermöglichen, ist bei dieser Ausführungsform das vorderseitige Weichteil 19° im Bereich der Druckausgleichsöffnung 23 derart ausgestaltet, dass es einem Schlauchansatz vergleichbar bis zu der Druckmesszelle 4 hin erstreckend ausgebildet ist und direkt auf der Druckmesszelle flächig dichtend aufliegt. Eine durch das Weichteil 19° durchgeführte Öffnung ist dabei fluchtend zu sowohl der Öffnung in der Druckmesszelle 4 als auch auf ihrer gegenüberliegenden Seite fluchtend zu der vorderseitigen Öffnung der Druckausgleichsöffnung 23 ausgebildet.

Bei einer weiteren Ausführungsform, welche anhand Fig. 4 skizziert ist, ist zur Unterstützung der Dichtwirkung der Abschnitt des Hartteils in vorderseitiger Richtung, das heißt in Richtung der Druckmesszelle 4 verlängert ausgebildet und ragt bis fast zur Druckmesszelle 4 hin. Der weiche Bereich 19, 19* ist bei dieser Ausführungsform in vorderseitiger Richtung aus mehreren Einzelkomponenten ausgebildet, wobei für die Dichtwirkung der Druckausgleichsöffnung insbesondere ein den vorderseitig verlängerten Abschnitt des Hartteils 18* abdeckender und/oder teilweise umgreifender Abschnitt von Bedeutung. Bei dieser Ausführungsform ist somit ein Teil des Hartteils 18* als rohrförmige Leitung in Richtung der Druckmesszelle ausgebildet. Natürlich könnte entsprechend auch auf der rückseitigen Seite der Abdichteinrichtung 8 ein derart vorspringender Abschnitt des Hartteils ausgestaltet sein, um ein insbesondere schlauchförmiges, leicht elastisches Rohr überzustecken oder einzustecken, so dass in rückseitiger Richtung der Einsatz eines Weichteils gegebenenfalls sogar ganz entfallen kann.

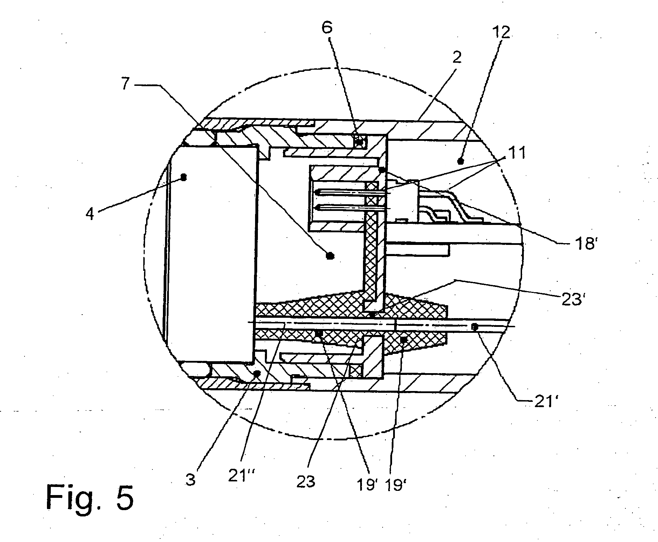

Fig. 5 zeigt eine noch weitere Ausführungsform, bei welcher das Hartteil 18' als im Wesentlichen flächiges Element ausgestaltet ist. Die Druckausgleichsöffnung 23' bei dieser Ausgestaltung ist dabei größer dimensioniert als ein Druckausgleichsrohr, welches durch diese hindurchführt oder eine durch das Weichteil 19' hindurchführende Druckausgleichöffnung. Um eine dichte Abdichtung zu ermöglichen, erstreckt sich das Weichteil 19' die entsprechenden Druckausgleichsleitungen 21', 21'' umgebend zusammen mit diesen durch die Druckausgleichsöffnung 23' hindurch. Dabei ist die Druckausgleichsleitung 21'' zur Druckmesszelle 4 hin beispielhaft wieder lediglich durch eine entsprechend weit dimensionierte Durchgangsöffnung in dem Weichteil 19' ausgebildet. Vorteilhafterweise umgreift das Weichteil 19' im beidseitigen Nachbarbereich zu der Druckausgleichsöffnung 23' die vorderseitige und die rückseitige Wandung des Hartteils 18' zumindest teilweise, so dass Hartteil 18' und Weichteil 19' fest miteinander verbunden sind.

Ein weiterer Vorteil derartiger Anordnungen besteht darin, dass die Auswerte-Elektronik 14 im rückseitigen Raum optional mittels Schnapphaken oder Steckverbindern ebenfalls an der Abdichteinrichtung 8 befestigt werden kann.

Ein weiterer Vorteil besteht darin, dass die elektrische Verbindung mittels der elektrischen Leiter 11 zwischen der Auswerte-Elektronik 14 und der Sensor-Elektronik bzw. der zumindest einen Elektronikkomponente 9 durch ein Dichtelement in Form des Weichteils 19 an der Abdichteinrichtung 8 geführt werden und dadurch beim Vergießen des Vergussmaterials 15 kein Vergussmaterial in den freien Raum mit der Elektronikkomponente 9 fließen kann bzw. die Steckverbindung luftdicht ausgestaltet wird.

## Patentansprüche

1. Abdichteinrichtung (8) zum Verschließen eines Druckmesszellengehäuses (3), wobei die Abdichteinrichtung (8) eine Druckausgleichsöffnung (23; 23') für eine Druckausgleichsleitung (21; 21'; 21"; 20) einer im Druckmesszellengehäuse (3) aufgenommenen Druckmesszelle (4) aufweist,
- die Abdichteinrichtung (8) aus einem formstabilen Hartteil (18; 18*; 18') mit zumindest einem im Bereich der Druckausgleichsöffnung (23; 23') an dem Hartteil (18; 18*; 18') angeordneten, elastischen Weichteil (19; 19°; 19*; 19') ausgebildet ist,
**dadurch gekennzeichnet, dass** das Hartteil (18; 18*; 18') und das Weichteil fest miteinander verbunden sind.

2. Abdichteinrichtung nach Anspruch 1,
**dadurch gekennzeichnet, dass**
das Hartteil (18; 18*; 18') und das Weichteil (19°; 19*; 19') mittels einer Rast- oder Eingriffsverbindung fest miteinander verbunden sind.

3. Abdichteinrichtung nach Anspruch 1 oder 2,
**dadurch gekennzeichnet, dass**
das Hartteil (18; 18*; 18') und das Weichteil (19°; 19*; 19') miteinander wechselseitig verklebt sind.

4. Abdichteinrichtung nach einem der vorhergehenden Ansprüche, bei welcher das Hartteil (18; 18*; 18') aus einem Thermoplast ausgebildet ist.

5. Abdichteinrichtung nach einem der vorhergehenden Ansprüche, bei welcher das Weichteil (19; 19°; 19*; 19') aus einem thermoplastischen Elastomer ausgebildet ist.

6. Abdichteinrichtung nach einem vorstehenden Anspruch, bei welcher im Bereich der Druckausgleichsöffnung (23) auf zumindest einer Seite eine Vertiefung im Hartteil (18; 18*) ausgebildet ist zum Einstecken oder Einfügen einer Druckausgleichsleitung (21) und/oder eines Weichteils (19).

7. Abdichteinrichtung nach einem vorstehenden Anspruch, bei welcher im Bereich der Druckausgleichsöffnung (23) eine Erhebung, insbesondere ein vorspringender rohrförmiger Abschnitt des Hartteils (18; 18*) ausgebildet ist.

8. Abdichteinrichtung nach einem vorstehenden Anspruch, bei welcher das Weichteil (19') sich durch die das Hartteil (18') durchdringende Druckausgleichsöffnung (23') hindurch erstreckend ausgebildet ist.

9. Abdichteinrichtung nach einem vorstehenden Anspruch, bei welcher das Weichteil (19°) die Druckausgleichsöffnung (23) umgebend zwischen dem Hartteil (18) und einer Öffnung in der Druckmesszelle (4) oder einer Druckausgleichsleitung (20) angeordnet ist.

10. Abdichteinrichtung nach Anspruch 9, bei welcher das Weichteil (19°) sich vom Hartteil (18) in Richtung der Druckmesszelle (4) bis zur Druckmesszelle (4) erstreckend ausgebildet ist.

11. Druckmesszelleneinrichtung mit einer Abdichteinrichtung (8) nach einem vorstehenden Anspruch und mit einer Druckmesszelle (4), wobei zwischen der Abdichteinrichtung (8) und der Druckmesszelle (4) ein freier Raum (7) mit zumindest einer Elektronikkomponente (9) ausgebildet ist.

12. Druckmesszelleneinrichtung nach Anspruch 11, bei welcher das Weichteil (19°) der Abdichteinrichtung (8) eine Öffnung der Druckmesszelle (4) dicht abdichtend umgebend direkt an der Druckmesszelle (4) anliegt.

13. Druckmesszelleneinrichtung nach Anspruch 11, bei welcher das Weichteil (19) eine Druckausgleichsleitung (20) der Druckmesszelle (4) abdichtend, insbesondere dicht umgebend ausgebildet ist.

14. Druckmesszelleneinrichtung nach einem der Ansprüche 11 bis 13, bei welcher das Weichteil (19; 19') eine Druckausgleichsleitung (21; 21') abdichtend dicht umgebend ausgebildet ist, wobei die Druckausgleichsleitung (21; 21') auf einer zur Druckmesszelle (4) abgewandten Seite der Abdichteinrichtung (8) durch ein Gehäuse (2) einer Druckmessvorrichtung führt.

15. Druckmessvorrichtung (1) mit einer Druckmesszelleneinrichtung nach einem der Ansprüche 11 bis 14 vorderseitig eines Gehäuses (2), wobei durch das Gehäuse (2) eine Druckausgleichsleitung (21; 21') zur Druckausgleichsöffnung (23; 23') fluchtend führt, wobei die Druckausgleichsleitung (21; 21') durch das Weichteil (19; 19') zum Gehäuse-Innenraum des Gehäuses (2) abgedichtet ist und wobei der Gehäuse-Innenraum mit einem Vergussmaterial (15) vergossen ist.

## Claims

1. Sealing device (8) for sealing a pressure measurement cell housing (3), wherein the sealing device (8) has a pressure compensation aperture (23; 23') for a pressure compensation line (21; 21'; 21"; 20) of a pressure measurement cell (4) accommodated in the pressure measurement cell housing (3),
- the sealing device (8) is made of a dimensionally stable hard part (18; 18*; 18') with at least one elastic soft part (19; 19°; 19*; 19') arranged in the area of the pressure compensation aperture (23; 23') on the hard part (18; 18*; 18'),
**characterised in that**
the hard part (18; 18*; 18') and the soft part are firmly connected to one another.

2. Sealing device according to claim 1, **characterised in that** the hard part (18; 18*; 18') and the soft part (19°; 19*; 19') are firmly connected to one another by means of a catch or snap-in connection.

3. Sealing device according to claim 1 or 2, **characterised in that** the hard part (18; 18*; 18') and the soft part (19°; 19*; 19') are mutually glued to one another.

4. Sealing device according to one of the preceding claims, in which the hard part (18; 18*; 18') is made of a thermoplastic material.

5. Sealing device according to one of the preceding claims, in which the soft part (19; 19°; 19*; 19') is made of a thermoplastic elastomer.

6. Sealing device according to a preceding claim, in which, on at least one side, a recess is provided in the hard part (18; 18*) in the area of the pressure compensation aperture (23), for introducing or inserting a pressure compensation line (21) and/or a soft part (19).

7. Sealing device according to a preceding claim, in which an elevation is formed in the area of the pressure compensation aperture (23), in particular a projecting tubular section of the hard part (18; 18*).

8. Sealing device according to a preceding claim, in which the soft part (19') is designed to extend through the pressure compensation aperture (23') that penetrates through the hard part (18').

9. Sealing device according to a preceding claim, in which the soft part (19°) is arranged between the hard part (18) and an aperture in the pressure measurement cell (4) or a pressure compensation line (20), such that it encompasses the pressure compensation aperture (23).

10. Sealing device according to claim 9, in which the soft part (19°) is designed to extend from the hard part (18) in the direction of the pressure measurement cell (4) up to the pressure measurement cell (4).

11. Pressure measurement cell device with a sealing device (8) according to a preceding claim and with a pressure measurement cell (4), wherein formed between the sealing device (8) and the pressure measurement cell (4) is a free space (7) with at least one electronic component (9).

12. Pressure measurement cell device according to claim 11, in which the soft part (19°) of the sealing device (8) rests directly against the pressure measurement cell (4), such that it tightly seals an aperture of the pressure measurement cell (4).

13. Pressure measurement cell device according to claim 11, in which the soft part (19) is designed to seal a pressure compensation line (20) of the pressure measurement cell (4), in particular tightly encompassing it.

14. Pressure measurement cell device according to one of the claims 11 to 13, in which the soft part (19; 19') is designed to seal a pressure compensation line (21; 21'), tightly encompassing it, wherein the pressure compensation line (21; 21'), on a side of the sealing device (8) facing away from the pressure measurement cell (4), leads through a housing (2) of a pressure measurement device.

15. Pressure measurement device (1) with a pressure measurement cell device according to one of the claims 11 to 14 at the front face of a housing (2), wherein leading through the housing (2) is a pressure compensation line (21; 21') which is aligned with the pressure compensation aperture (23; 23'), wherein the pressure compensation line (21; 21') is sealed relative to the interior of the housing (2) by the soft part (19; 19') and wherein the housing interior is potted with a casting compound (15).

## Revendications

1. Installation d'étanchéité (8) pour permettre de fermer un boitier (3) d'une cellule de mesure de pression, cette installation d'étanchéité (8) comprenant une ouverture d'équilibrage de pression (23, 23') pour une conduite d'équilibrage de pression (21, 21', 21", 20) d'une cellule de mesure de pression (4) logée dans le boitier (3),
l'installation d'étanchéité (8) étant réalisée à partir d'une pièce dure (18, 18*, 18') indéformable avec au moins une pièce molle élastique (19, 19°, 19*, 19') montée sur la pièce dure (18, 18*, 18') dans la zone de l'ouverture d'équilibrage de pression (23, 23'),
**caractérisée en ce que**
la pièce dure (18, 18*, 18') et la pièce molle sont fermement reliées l'une à l'autre.

2. Installation d'étanchéité conforme à la revendication 1,
**caractérisée en ce que**
la pièce dure (18, 18*, 18') et la pièce molle (19°, 19*, 19') sont fermement reliées l'une à l'autre au moyen d'une liaison par encliquetage ou d'une liaison par engrènement.

3. Installation d'étanchéité conforme à la revendication 1 ou 2,
**caractérisée en ce que**
la pièce dure (18, 18*, 18') et la pièce molle (19°, 19*, 19') sont mutuellement collées l'une à l'autre.

4. Installation d'étanchéité conforme à l'une des revendications précédentes dans laquelle la pièce dure (18, 18*, 18') est réalisée en un matériau thermoplastique.

5. Installation d'étanchéité conforme à l'une des revendications précédentes dans laquelle la pièce molle (19, 19°, 19*, 19') est réalisée en un élastomère thermoplastique.

6. Installation d'étanchéité conforme à l'une des revendications précédentes dans laquelle au niveau de l'ouverture d'équilibrage de pression (23), est formée dans la pièce dure (18, 18*) au moins d'un côté, une cavité pour permettre d'enficher ou d'insérer une conduite d'équilibrage de pression (21) et/ou une pièce molle (19).

7. Installation d'étanchéité conforme à l'une des revendications précédentes dans laquelle au niveau de l'ouverture d'équilibrage de pression (23) est formé un bossage, notamment un segment de forme tubulaire faisant saillie de la pièce dure (18, 18*).

8. Installation d'étanchéité conforme à l'une des revendications précédentes dans laquelle la pièce molle (19') est réalisée de façon à s'étendre au travers de l'ouverture d'équilibrage de pression (23') qui traverse la pièce dure (18').

9. Installation d'étanchéité conforme à l'une des revendications précédentes dans laquelle la pièce molle (19°) est positionnée de manière à entourer l'ouverture d'équilibrage de pression (23) entre la pièce dure (18) et une ouverture de la cellule de mesure de pression (4) ou une conduite d'équilibrage de pression (20).

10. Installation d'étanchéité conforme à la revendication 9, dans laquelle la pièce molle (19°) est réalisée de façon à s'étendre à partir de la pièce dure (18) en direction de la cellule de mesure de pression (4) jusqu'à cette cellule de mesure de pression (4).

11. Installation de cellules de mesure de pression comportant une installation d'étanchéité (8) selon l'une des revendications précédentes, ainsi qu'une cellule de mesure de pression (4) dans laquelle est réalisée, entre l'installation d'étanchéité (8) et la cellule de mesure de pression (4) un espace libre (7) avec au moins un composant électronique (9).

12. Installation de cellules de mesure de pression conforme à la revendication 11, dans laquelle la pièce molle (19°) de l'installation d'étanchéité (8) s'applique directement contre la cellule de mesure de pression (4) en entourant hermétiquement une ouverture de la cellule de mesure de pression (4).

13. Installation de cellules de mesure de pression conforme à la revendication 11, dans laquelle la pièce molle (19) est réalisée de façon à assurer l'étanchéité en particulier à entourer hermétiquement une conduite d'équilibrage de pression (20) de la cellule de mesure de pression (4).

14. Installation de cellules de mesure de pression conforme à l'une des revendications 11 à 13, dans laquelle la pièce molle (19, 19') est réalisée de façon à entourer hermétiquement pour en assurer l'étanchéité une conduite d'équilibrage de pression (21, 21'), cette conduite d'équilibrage de pression (21, 21') conduisant à un côté de l'installation d'étanchéité (8) situé à l'opposé de la cellule de mesure de pression (4) au travers d'un boitier (2) d'une installation de mesure de pression.

15. Installation de mesure de pression (1) comprenant une installation de cellules de mesure de pression conforme à l'une des revendications 11 à 14, sur le devant d'un boitier (2) dans laquelle une conduite d'équilibrage de pression (21, 21') s'étend au travers du boitier (2) en étant alignée sur l'ouverture d'équilibrage de pression (23, 23'), la conduite d'équilibrage de pression (21, 21') est rendue étanche par la partie molle (19, 19') par rapport au volume interne du boitier (2) et le volume interne du boitier est rempli par coulée avec un matériau de coulée (15).
